Europäisches Patentamt

European Patent Office

Office européen des brevets

(19)

(11) Veröffentlichungsnummer: **0 053 292**
**A1**

(12) # EUROPÄISCHE PATENTANMELDUNG

(21) Anmeldenummer: **81109320.2**

(22) Anmeldetag: **30.10.81**

(51) Int. Cl.³: **H 04 N 5/32**

(30) Priorität: **01.12.80 DE 3045172**

(43) Veröffentlichungstag der Anmeldung: **09.06.82**
Patentblatt 82/23

(84) Benannte Vertragsstaaten: **AT BE CH DE FR GB IT LI LU NL SE**

(71) Anmelder: **Heitlinger, Paul, Dr., Chemnitzer Strasse 15, D-6054 Rodgau 3 (Nieder-Roden) (DE)**
Anmelder: **Rödder, Fritz, Schulstrasse 1, D-6273 Waldems/Esch (DE)**

(72) Erfinder: **Lemke, Norbert, Veilchenstrasse 10, D-8031 Puchheim (DE)**

(74) Vertreter: **Weber, Dieter, Dr. et al, Patentanwälte Dr. D. Weber und Dipl.-Phys. K. Seiffert Gustav-Freytag-Strasse 25, D-6200 Wiesbaden 1 (DE)**

(54) **Verfahren zur plastischen Bildwiedergabe, insbesondere von Röntgenaufnahmen.**

(57) Um Bilder, insbesondere Röntgenaufnahmen, auf einem Bildschirm plastisch wiederzugeben, werden von jedem mit Hilfe einer Fernsehkamera aufgenommenen Bildpunkt zwei zeitlich gegeneinander verschobene elektrische Bildsignale erzeugt, eines der beiden Bildsignale von positiv nach negativ oder von negativ nach positiv umgekehrt, von den umgekehrten Bildsignalen diejenigen, die in dem Bild scharfe Konturen ergeben, herausgefiltert, die resultierenden Bildsignale in ihrer zeitlichen Verschiebung wieder zusammengeführt und die aus der Überlagerung der zusammengeführten Bildsignale resultierenden Bildsignale auf dem Bildschirm in Bildpunkte transformiert.

# Dr. Dieter Weber
# Klaus Seiffert

Patentanwälte

Dipl.-Chem. Dr. Dieter Weber · Dipl.-Phys. Klaus Seiffert
Postfach 6145 · 6200 Wiesbaden

Europäisches Patentamt

Erhardtstr. 27

8000 München 22

D-6200 Wiesbaden 1

Gustav-Freytag-Straße 25
Telefon 0 61 21 / 87 27 20
Telegrammadresse: Willpatent
Telex: 4-186247

Postscheck: Frankfurt/Main 67 63-602
Bank: Dresdner Bank AG, Wiesbaden,
Konto-Nr. 276 807 (BLZ 510 800 60)

Datum 30. Oktober 1981

We/Wh

Dr. Paul Heitlinger, Chemnitzer
Str. 15, 6054 Rodgau 3
(Nieder-Roden)

Fritz Rödder, Schulstr. 1,
6273 Waldems/Esch

_ _ _ _ _ _ _ _ _ _ _ _ _ _ _ _ _ _ _ _ _ _ _

Verfahren zur plastischen Bildwiedergabe, insbesondere von Röntgenaufnahmen

_ _ _ _ _ _ _ _ _ _ _ _ _ _ _ _ _ _ _ _ _ _ _

Für die Auswertung von Röntgenfilmen durch den Arzt werden
bislang ausschließlich Lichtkästen verwendet, die eine von der Rückseite beleuchtete, Licht diffus durchlassende weiße Scheibe besitzen, auf deren Vorderseite der auszuwertende Röntgenfilm aufgelegt wird. Vielfach ist die Auswertung mit solchen Lichtkästen schwierig, insbesondere dann, wenn es sich um kontrastarme oder sehr helle Röntgenaufnahmen handelt, wie·man sie bei Anwendung einer möglichst kleinen Strahlenmenge zur Schonung des Patienten bekommt. Darüberhinaus ist es für den Arzt nicht einfach, anhand von Röntgenaufnahmen dem Patienten einen Befund zu erläutern, da Röntgenaufnahmen für den Laien kein räumliches Bild vermitteln, so daß dieser sich kaum vorstellen kann, welche Bildbereiche in der Realität Hohlräume und welche Bildbereiche hervortretende Details zeigen.

Zur besseren Auswertung sind auch bereits Zusatzgeräte für Lichtkästen, wie Lupen zur Ausschnittsvergrößerung oder sogenannte Kontrastfilter zur Abdunkelung heller Röntgenfilme, bekannt. Lupen ergeben jedoch immer eine Verzerrung des Bildes und verschlechtern den Kontrast, und sogenannte Kontrastfilter, d.h. getönte Glasscheiben, die über den Röntgenfilm gelegt werden, ergeben nur insgesamt eine Abdunkelung des Bildes, ohne den Kontrast zwischen hell und dunkel tatsächlich zu verstärken.

Die der Erfindung zugrundeliegende Aufgabe bestand nun darin, ein Verfahren zur Bildwiedergabe insbesondere von Röntgenaufnahmen zu bekommen, bei der die Details besser hervortreten und somit die Diagnose erleichtern und bei der auch für den Laien die räumlichen Beziehungen der Details einer Röntgenaufnahme oder eines anderen Bildes erkennbar und nachvollziehbar werden.

Überraschenderweise wurde gefunden, daß es die Möglichkeit gibt, Bilder, wie insbesondere Röntgenaufnahmen, auf einem elektronischen Bildschirm plastisch wiederzugeben, ohne daß die Aufnahme plastisch oder dreidimensional erfolgt ist, und durch eine solche plastische Bildwiedergabe eine erheblich bessere Bildauflösung und Erkennbarkeit von Details zu erhalten.

Zur Erzielung plastisch wirkender Bilder, sogenannter Stereobilder, war es bisher nötig, die Bildaufnahmen mit Spezialkameras zu machen, die zwei hinsichtlich des Blickwinkels gegeneinander verschobene Bilder erzeugen. Mit Spezialwiedergabegeräten werden diese beiden Bilder übereinander projiziert und ergeben dabei den Stereoeffekt. Es ist aber bislang nicht möglich, bei normal aufgenommenen Bildern, wie normalen Röntgenfilmen, in der Bildwiedergabe einen Stereoeffekt zu erzielen. Dies wird mit dem erfindungsgemäßen Verfahren erstmals erreicht.

Das erfindungsgemäße Verfahren zur plastischen Bildwiedergabe, insbesondere von Röntgenaufnahmen, auf einem elektronischen Bildschirm ist dadurch gekennzeichnet, daß man von jedem mit Hilfe einer Fernsehkamera aufgenommenen Bildpunkt zwei zeitlich gegeneinander verschobene elektrische Bildsignale erzeugt, eines der Bildsignale von positiv nach negativ oder von negativ nach positiv umkehrt, von den umgekehrten Bildsignalen diejenigen, die in dem Bild scharfe Konturen ergeben, herausfiltert, die so erhaltenen Bildsignale in ihrer zeitlichen Verschiebung wieder zusammenführt und die aus der Überlagerung der zusammengeführten Bildsignale resultierenden Bildsignale auf dem Bildschirm in Bildpunkte transformiert.

Überraschenderweise bekommt man nach diesem Verfahren aus einem normalen, völlig flach und unräumlich wirkenden Bild eine plastisch und räumlich wirkende Stereowiedergabe, die in dem ursprünglichen Bild kaum in Erscheinung tretende Details plastisch und damit wesentlich deutlicher in Erscheinung treten läßt. Es ist insbesondere auch überraschend, daß nach dem erfindungsgemäßen Verfahren das wiedergegebene Bild nicht etwa unscharf wird, sondern durch den erzielten dreidimensionalen Effekt an Schärfe und Aussagekraft gewinnt, so daß die Diagnose anhand solchermaßen wiedergegebener Röntgenaufnahmen erleichtert wird und sich der Patient bei Erläuterung einer solchermaßen wiedergegebenen Röntgenaufnahme erheblich leichter orientieren kann.

Da das erfindungsgemäße Verfahren nur die Art der Wiedergabe einer normalen Aufnahme, wie Röntgenaufnahme, betrifft, ohne daß dadurch die Aufnahmetechnik gegenüber der herkömmlichen Methode verändert werden müßte, ist es überflüssig, irgendetwas an den Röntgenbildaufnahmegeräten zu verändern. Es können also die bereits vorhandenen Röntgenbildaufnahmegeräte, die normale Röntgenbilder erzeugen, weiter verwendet werden, da diese normalen Röntgenbilder erfindungsgemäß in plastisch wirkende Stereobilder umgewandelt werden.

Das erfindungsgemäße Verfahren eignet sich nicht nur zur plastischen Bildwiedergabe von Röntgenaufnahmen, obwohl hier das bevorzugte Anwendungsgebiet liegt, sondern auch für eine solche Bildwiedergabe von optisch erzeugten Bildern, also Photographien, wie beispielsweise bei der Materialprüfung oder dergleichen.

Im Effekt werden nach dem erfindungsgemäßen Verfahren durch die zeitliche Verzögerung oder Verschiebung zwei Bilder miteinander überlagert, was aber überraschenderweise nicht zu einer Unschärfe oder zur Erzeugung von "Geisterbildern" führt. Die Ursache hierfür ist, daß das zweite Bild, welches sich mit dem ursprünglichen Bild zeitlich verzögert überlagert, in den Helligkeitswerten umgekehrt und bezüglich der kontrastbildenden Teile gefiltert ist, d.h. nach dem erfindungsgemäßen Verfahren wird ein Positivbild mit einem zeitlich verzögert wiedergegebenen Negativbild überlagert, wobei bei einem dieser beiden Bilder nur die Schatten erhalten bleiben, während die scharfen Konturen weggefiltert sind. Ob es sich bei dem gefilterten zweiten Bild um das Negativ oder Positiv handelt, hängt davon ab, ob man von einem positiven oder negativen Bild ausgeht. Geht man beispielsweise von einer negativen Röntgenaufnahme aus, wird gewöhnlich das zeitlich verzögerte zweite Bild zu einem Positiv umgekehrt, und aus diesem werden die scharfen Konturen herausgefiltert. Eine im ursprünglichen Negativ vorhandene dunkle Fläche bekommt dann durch die zeitliche Überlagerung mit der entsprechenden hellen Fläche des umgekehrten Bildes gegenüber dem ursprünglichen Bild an der einen Kante eine verdunkelte Zone und an der anderen Kante eine aufgehellte Zone, was den Eindruck vermittelt, daß es sich hierbei um Schlagschatten bzw. beleuchtete abschüssige Flächen handelt, die den dreidimensionalen Eindruck ergeben. Dieser führt seinerseits überraschenderweise zu einer stärkeren Bildauflösung der Details.

Die Kontraste können bei diesem Verfahren noch dadurch erhöht werden, daß man in dem umgekehrten Bild, aus dem die scharfen Konturen herausgefiltert wurden, die erhalten gebliebenen Schattenbereiche verstärkt, indem man die entsprechenden Bildsignale verstärkt.

Sowohl die zeitliche Verschiebung oder Verzögerung der beiden überlagerten Bilder als auch das Ausmaß des Herausfilterns der scharfe Konturen ergebenden Bildsignale als auch die Verstärkung der verbleibenden Bildsignale kann stufenlos gesteuert werden, so daß man die Kontraste und den Stereoeffekt im Einzelfall verändern und einstellen kann, um für das betreffende Bild eine optimale Wiedergabe zu bekommen.

Die technischen Mittel, mit denen man eine zeitliche Verschiebung der Bildwiedergabe, eine Umkehrung der Bildsignale, eine Herausfilterung der scharfe Konturen ergebenden Bildsignale und eine Verstärkung der verbleibenden Bildsignale erreichen kann, sind dem Fachmann an sich bekannt. So kann man die zeitliche Verzögerung beispielsweise mit Hilfe einer Verzögerungsleitung und das Herausfiltrieren mit Hilfe eines Kondensators erreichen. Überraschend ist dabei der Effekt, den man durch eine Kombination der beanspruchten Maßnahmen erhält, d.h. die Erzielung eines dreidimensionalen Bildeindruckes mit erheblich verbesserter Bildauflösung.

Die Kombination von zeitlicher Verschiebung, Umkehrung und Ausfilterung, die oben im einzelnen geschildert wurde, kann in einer Abtastrichtung der Fernsehkamera oder in beiden Abtastrichtungen erfolgen, wobei es jedoch im allgemeinen ausreicht, diese Maßnahmen in einer Abtastrichtung anzuwenden, um bereits vollplastisch wirkende Bilder zu erhalten.

Obwohl im Einzelfall die zeitliche Verschiebung der beiden zu überlagernden Bilder bzw. Bildsignale unter Optimierung der Bildwiedergabe stufenlos eingestellt werden kann, ist allgemein zu sagen, daß die zeitliche Verschiebung in geeignetem Maß erfolgen kann, um den besten plastischen Eindruck zu erhalten.

Die Anwendungsmöglichkeiten des erfindungsgemäßen Verfahrens sind vielfältig, wie auf dem Gebiet der Materialprüfung, der Demonstration ärztlicher Befunde anhand von optischen Fotografien, vorzugsweise aber auf dem Gebiet der Röntgenaufnahmen, bei denen dunkle Bereiche als Hohlräume und helle Bereiche als hervortretende Details empfunden werden.

Patentansprüche

1. Verfahren zur plastischen Bildwiedergabe, insbesondere von Röntgenaufnahmen, auf einem elektronischen Bildschirm, dadurch gekennzeichnet, daß man von jedem mit Hilfe einer Fernsehkamera aufgenommenen Bildpunkt zwei zeitlich gegeneinander verschobene elektrische Bildsignale erzeugt, eines der beiden Bildsignale von positiv nach negativ oder von negativ nach positiv umkehrt, von den umgekehrten Bildsignalen diejenigen, die in dem Bild scharfe Konturen ergeben, herausfiltert, die resultierenden Bildsignale in ihrer zeitlichen Verschiebung wieder zusammenführt und die aus der Überlagerung der zusammengeführten Bildsignale resultierenden Bildsignale auf dem Bildschirm in Bildpunkte transformiert.

2. Verfahren nach Anspruch 1, dadurch gekennzeichnet, daß man die beiden Bildsignale eines jeden Bildpunktes in geeignetem Maß gegeneinander verschiebt.

3. Verfahren nach Anspruch 1 und 2, dadurch gekennzeichnet, daß man die nicht herausgefilterten umgekehrten Bildsignale vor der Zusammenführung mit den zeitlich verschobenen Bildsignalen verstärkt.

Europäisches
Patentamt

**EUROPÄISCHER RECHERCHENBERICHT**

0053292

Nummer der Anmeldung

EP 81 10 9320

## EINSCHLÄGIGE DOKUMENTE

KLASSIFIKATION DER
ANMELDUNG (Int. Cl.³)

| Kategorie | Kennzeichnung des Dokuments mit Angabe, soweit erforderlich, der maßgeblichen Teile | betrifft Anspruch |
|---|---|---|
| Y | US - A - 4 058 832 (VAGI)<br><br>* Spalte 11, Zeilen 36-61; von Spalte 12, Zeile 59 bis Spalte 13, Zeile 51; Figuren 1,4 * | 1-3 |
| Y | DE - A - 2 048 851 (SAAB - SCANIA AB)<br><br>* Seite 2, Zeilen 1-5; von Seite 5, Zeile 15 bis Seite 6, Zeile 21; Figuren 1,4 * | 1-3 |
| Y | US - A - 1 356 442 (GARBUTT)<br><br>* Seite 1, Zeilen 37-43; Seite 2, Zeilen 64-76; Figuren 1-3 * | 1-2 |

H 04 N 5/32

RECHERCHIERTE
SACHGEBIETE (Int. Cl.³)

H 04 N 5/32
G 03 C 9/00

KATEGORIE DER
GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 11-03-1982 | ZANELLA |

EPA form 1503.1  06.78